(19) Europäisches Patentamt
European Patent Office
Office européen des brevets

(11) **EP 2 193 261 B1**

(12) **FASCICULE DE BREVET EUROPEEN**

(45) Date de publication et mention
de la délivrance du brevet:
**04.01.2012 Bulletin 2012/01**

(51) Int Cl.:
*F01N 3/08* (2006.01)      *F01N 3/20* (2006.01)
*F01N 11/00* (2006.01)

(21) Numéro de dépôt: **08834427.0**

(22) Date de dépôt: **01.08.2008**

(86) Numéro de dépôt international:
**PCT/FR2008/051450**

(87) Numéro de publication internationale:
**WO 2009/040485 (02.04.2009 Gazette 2009/14)**

(54) **PROCEDE ET SYSTEME DE GESTION D'UN MODULE DE TRAITEMENT DES GAZ D'ECHAPPEMENT**

VERFAHREN UND VORRICHTUNG ZUR HANDHABUNG EINES ABGASBEHANDLUNGSMODULS

METHOD AND SYSTEM FOR MANAGING AN EXHAUST GAS PROCESSING MODULE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.09.2007 FR 0757831**

(43) Date de publication de la demande:
**09.06.2010 Bulletin 2010/23**

(73) Titulaire: **Renault s.a.s.**
**92100 Boulogne-Billancourt (FR)**

(72) Inventeur: **LYNCH, Charlotte**
**F-75012 Paris (FR)**

(56) Documents cités:
**US-A1- 2004 031 261      US-A1- 2006 258 014**

**Description**

La présente invention concerne un procédé et un système de gestion d'un module de traitement des gaz d'échappements, en particulier un catalyseur capable de traiter des oxydes d'azote (NOx), notamment NO et $NO_2$. Plus précisément, l'invention concerne un procédé pour évaluer l'état du catalyseur, notamment son empoisonnement au soufre.

On peut diagnostiquer l'état de fonctionnement d'un catalyseur à partir de procédés de commande permettant de connaître la capacité d'adsorption des NOx. De tels diagnostics sont notamment utiles pour savoir si le catalyseur doit être changé, afin de respecter les normes environnementales.

Les demandes de brevet US 2004/0250533, EP 0936 349, US 2004/0055278, US 2003/0010016, US 2004/0040289, JP 2005/321247 et EP 1 517 013 concernent des dispositifs utilisant une sonde à NOx en aval d'un catalyseur de NOx pour déterminer son état de fonctionnement.

Toutefois, avec ce type de diagnostic, on n'est pas en mesure de distinguer le vieillissement normal du catalyseur de son empoisonnement (par du soufre dans le cas d'un piège à NOx ou par des hydrocarbures dans le cas d'un catalyseur de réduction) qui limite l'adsorption des NOx qu'on souhaite régénérer. En conséquence, ce type de diagnostic mène de façon anticipée à la conclusion d'un vieillissement du catalyseur et donc d'un changement de celui-ci, alors qu'il peut en réalité encore fonctionner parfaitement. Or, un tel changement est particulièrement coûteux pour le conducteur du véhicule.

Aussi, dans le cas d'un piège à NOx par exemple, on a proposé des procédés permettant de faire la distinction entre le vieillissement, irréversible, du piège à NOx, d'une part et de son empoisonnement, quant à lui réversible, par le soufre, d'autre part. C'est le cas par exemple du procédé de la demande FR 2 783 872. Une fois le diagnostic réalisé et si l'empoisonnement au soufre est déterminé, on met alors en place un procédé de purge du soufre. Cependant, les purges du soufre ne sont pas sans conséquence pour le vieillissement du piège car la purge du soufre nécessite des températures élevées, Par ailleurs, les purges du soufre entraînent également une augmentation de la consommation en hydrocarbure et des émissions polluantes en hydrocarbures et monoxyde de carbone.

Dans le cas d'un catalyseur par réduction, on rencontre également les mêmes difficultés en raison des purges des hydrocarbures qui s'effectuent aussi à hautes températures.

Le document US 2004/0031261 (SUN) concerne un dispositif pouvant déterminer la capacité de stockage d'un piège à NOx. En particulier, le dispositif détermine, pendant une phase de purge, la différence entre la durée prévue pour effectuer la purge et la durée effectivement prise pour effectuer la purge.

Il est donc nécessaire de maîtriser la purge du soufre ou des hydrocarbures, notamment sa durée, sa fréquence, son déclenchement..., et donc de n'opérer celle-ci que sous certaines conditions, pour qu'elle ne soit pas contre-productive, c'est-à-dire qu'elle ne provoque pas elle-même un vieillissement anticipé du catalyseur, voire un endommagement du moteur par dilution de carburant dans l'huile.

Le but de l'invention est de gérer le fonctionnement d'un catalyseur à NOx, et notamment le déclenchement des purges en soufre ou en hydrocarbures, de manière à améliorer son fonctionnement global.

Le but de l'invention, est également de déterminer le déclenchement des purges sans déterminer directement la quantité de soufre ou d'hydrocarbures contenus respectivement dans le piège à NOx ou le catalyseur par réduction.

Selon un aspect de l'invention, il est proposé un procédé de gestion d'un module de traitement des gaz d'échappement produits par un moteur à combustion interne d'un véhicule automobile, le module de traitement comprenant un catalyseur capable de traiter des oxydes d'azote présents dans les gaz d'échappement, caractérisé en ce que :

- on mesure la quantité de NOx sortant du Catalyseur ;
- on détermine la quantité de NOx entrant et/ou stockée dans le catalyseur ;
- on calcule, à partir de la quantité de NOx entrant et/ou stockée dans le catalyseur et de la quantité de NOx sortant du catalyseur, la valeur d'une grandeur représentative de l'efficacité du catalyseur à traiter les NOx ;
- on compare la valeur de la grandeur représentative de l'efficacité du catalyseur à un premier seuil et à deuxième seuil inférieur au premier seuil et, la grandeur représentative de l'efficacité du catalyseur est inférieure au premier seuil et supérieure au deuxième seuil, on déclenche une procédure de purge du catalyseur lorsque la distance parcourue par le véhicule automobile depuis la dernière purge est supérieure à une valeur mémorisée ou déterminée, ou on déclenche les moyens d'information lorsque la distance parcourue est inférieure à la valeur mémorisée ou déterminée.

Le catalyseur est un piège à $NO_x$ ou un catalyseur par réduction et la purge du catalyseur est une purge du soufre dans le cas d'un piège a $NO_x$, une purge aux hydrocarbures dans le cas d'un catalyseur par reduction.

Il est ainsi possible de connaître l'état de fonctionnement d'un catalyseur à $NO_x$ à partir de la quantité de NOx sortant du catalyseur et d'une mesure ou d'un modelé donnant la quantité de NOx entrant et/ou stockée dans le catalyseur. L'état de fonctionnement du catalyseur est déterminés partir de son efficacité à traiter les NOx, et les procédures de purge sont déclenchées, ou non, en fonction de la valeur de cette efficacité.

De plus, le procédé est réalisé de manière passive, et ne modifie pas le comportement du catalyseur ou du moteur à combustion interne : il ne nécessite que la mesure de la quantité de NOx en sortie du catalyseur. Le procédé peut donc être mis en oeuvre fréquemment sans incidence sur le fonctionnement ou l'état du système, et peut permettre de prendre une décision après plusieurs itérations, ce qui améliore la robustesse du procédé.

En outre, la procédure de purge dépend également d'une outre grandeur à partir de laquelle on peut également estimer l'empoisonnement. Ainsi, lorsque la distance parcourue par le véhicule automobile est inférieure à une valeur donnée, la procédure de purge ne sera pas déclenchée car on considérera que la perte d'efficacité du catalyseur n'est pas due à un empoisonnement mais au vieillissement du catalyseur ou à une cause extérieure. Une purge ne permettrait donc pas de rétablir l'efficacité du catalyseur, mais risquerait au contraire de l'endommager encore plus et d'augmenter la consommation et les émissions polluantes du véhicule. Le procédé permet alors de déclencher directement des moyens d'information à partir desquels le changement de catalyseur sera décidé.

Préférentieliement, on compare la valeur de la grandeur représentative de l'efficacité du catalyseur à un troisième seuil inférieur au deuxième seuil et, lorsque la valeur de la grandeur représentative de l'efficacité du catalyseur est inférieure au troisième seuil, on déclenche les moyens d'information,

Ici enclore, la procédure de purge n'est pas systématiquement déclenchée lorsque l'efficacité du catalyseur à NOx devient inférieure à une valeur donnée. Ainsi, lorsque l'efficacité du catalyseur devient trop faible, on considère que la purge ne permettra pas au catalyseur de retrouver une efficacité suffisante pour être opérationnel sur le long terme. On déclenche alors les moyens d'information sans effectuer de procédure de purge qui pourrait détériorer davantage le catalyseur.

Selon un mode de mise on oeuvre, on détermine la quantité de NOx entrant dans le catalyseur à partir de valeurs mesurées.

Selon un autre mode de mise en oeuvre, on détermine la quantité de NOx entrant et/ou stockée dans le catalyseur à partir de valeurs mémorisées ou déterminées.

Dans ce mode de mise on oeuvre, on détermine la quantité de NOx entrant et/ou stockée dans le catalyseur à partir d'un modèle, ce qui permet de diminuer le nombre de capteur à oxydes d'azote.

Selon ce mode de mise en oeuvre, avant de comparer la valeur de la grandeur représentative de l'efficacité du catalyseur au premier seuil, on calcule l'écart entre la valeur de la grandeur représentative de l'efficacité du catalyseur et une valeur mémorisée ou déterminée et, lorsque l'écart est supérieur à un quatrième seuil, on détermine à nouveau la quantité de NOx entrant et/ou stockée dans le catalyseur à partir de valeurs mémorisées ou déterminées et à partir de l'écart calculé, de manière à prendre en compte le vieillissement du catalyseur.

Le modèle utilisé pour déterminer la quantité d'oxydes d'azote en entrée du catalyseur peut tenir compte, ou non, du vieillissement du catalyseur et donc prévoir, ou non, une diminution irréversible de son efficacité. Dans les deux cas, il est possible de corriger le modèle de manière à prendre en compte le vieillissement du catalyseur. Ainsi, à partir de l'évolution théorique en fonction du temps de l'efficacité du catalyseur, on peut réajuster le modèle de calcul de la quantité de NOx entrant et/ou stockée dans le catalyseur, en particulier quand l'efficacité calculée par le procédé devient trop différente de la valeur théorique. On peut ainsi prendre en compte le vieillissement naturel et irréversible du catalyseur dans le calcul de l'efficacité du catalyseur, et en déduire de manière plus précise l'empoisonnement au soufre ou aux hydrocarbures.

Selon un autre aspect de l'invention, il est proposé un système de gestion d'un module de traitement des gaz d'échappement produits par un moteur à combustion interne d'un véhicule automobile, caractérisé en ce qu'il comprend :

- un circuit d'acheminement des gaz d'échappement
- un catalyseur monté dans le circuit d'acheminement et capable de traiter des oxydes d'azote présents dans les gaz d'échappement
- un capteur à NOx monté dans le circuit d'acheminement, en aval du catalyseur, et capable de mesurer la quantité de NOx sortant du catalyseur,
- un moyen capable de déterminer la quantité de NOx entrant et/ou stockée dans le catalyseur et
- une unité de contrôle électronique comprenant :

  - un premier moyen capable de calculer, à partir de la quantité de NOx entrant et/ou stockée dans le catalyseur et de la quantité de NOx sortant du catalyseur, la valeur d'une grandeur représentative de l'efficacité du catalyseur à traiter les NOx;
  - un deuxième moyen capable de comparer la valeur de la grandeur représentative de l'efficacité du catalyseur à un premier seuil et à un deuxième seuil inférieur au premier seuil , et capable, lorsque la valeur de la grandeur représentative de l'efficacité du catalyseur est inférieure au premier seuil et supérieure au deuxième seuil, de déclencher une procédure de purge du catalyseur lorsque la distance parcourue par le véhicule automobile depuis la dernière purge est supérieure à une valeur mémorisée ou déterminée, ou de déclencher les moyens d'information lorsque la distance parcourue est inférieure à la valeur mémorisée ou déterminée.

Le catalyseur est un piège à $NO_x$ ou un catalyseur par réduction et la purge du catalyseur est une purge du soufre dans le cas d'un piège à $NO_x$ une purge aux hydrocarbures dans d'un catalyseur par réduction.

Préférentiellement, le deuxième moyen est capable de comparer la valeur de la grandeur représentative de l'efficacité du catalyseur à un deuxième seuil inférieur au premier seuil et est capable, lorsque la valeur de la grandeur représentative de l'efficacité du catalyseur est inférieure au premier seuil et supérieure au deuxième seuil, de déclencher une procédure de purge du catalyseur lorsque la distance parcourue par le véhicule automobile depuis la dernière purge est supérieure à une valeur mémorisée ou déterminée, ou de déclencher les moyens d'information lorsque la distance parcourue est inférieure à la valeur mémorisée ou déterminée.

Préférentiellement, le deuxième moyen est capable de comparer la valeur de la grandeur représentative de l'efficacité du catalyseur à un troisième seuil inférieure au deuxième seuil, et est capable, lorsque la valeur de la grondeur représentative de l'efficacité du catalyseur est intérieure au troisième seuil, de déclencher les moyens d'information.

Selon un mode de réalisation, le moyen capable de déterminer la quantité de NOx entrant et/ou stockée dans le catalyseur comprend un deuxième capteur à NOx monté dans le circuit d'acheminement, en amont du catalyseur, et capable de mesurer la quantité de NOx entrant dans le catalyseur.

Selon un autre mode de réalisation, le moyen capable de déterminer la quantité de NOx entrant et/ou stockée dans le catalyseur est un troisième moyen compris dans l'unité de contrôle électronique, le troisième moyen étant capable de déterminer la quantité de NOx entrant et/ou stockée dans le catalyseur à partir de valeurs mémorisées ou déterminées, et de calculer l'écart entre la valeur de la grandeur représentative de l'efficacité du catalyseur et une valeur mémorisée ou déterminée, de manière à ce que, lorsque l'écart est supérieur à un quatrième seuil, le troisième moyen est capable de déterminer à nouveau la quantité de NOx entrant et/ou stockée dans le catalyseur à partir de valeurs mémorisées ou déterminées et à partir de l'écart calculé de manière à prendre en compte le vieillissement du catalyseur.

D'autres buts, caractéristiques et avantages de l'invention apparaîtront à la lecture de la description suivante, donnée à titre d'exemple nullement limitatif, et faite en référence aux dessins annexés sur lesquels :

- la figure 1 illustre un mode de réalisation d'un système selon l'invention, et
- la figure 2 représente un synoptique du fonctionnement d'un procédé selon l'invention.

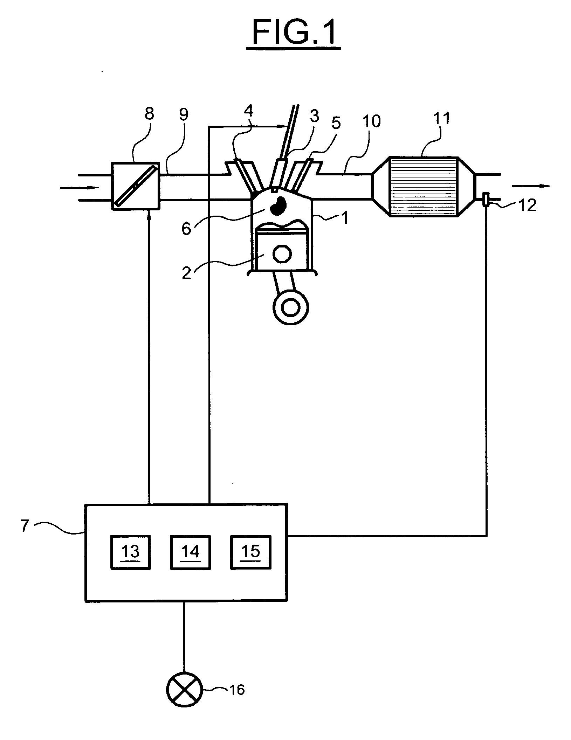

Sur la figure 1, on a représenté un bloc-cylindre 1 d'un moteur à combustion interne, par exemple diesel. Le bloc-cylindre 1 comprend un piston 2 guidé de façon déplaçable, un injecteur de carburant 3, une soupape d'admission 4 et une soupape d'échappement 5. En outre, dans le cylindre 1 se trouve une chambre de combustion 6 délimitée par le piston 2. De l'air neuf est amené à la chambre de combustion 6 par la soupape d'admission 4, des gaz d'échappement étant évacués après combustion, au moyen de la soupape d'échappement 5.

Une unité de contrôle électronique 7 assure la commande de la combustion, notamment en envoyant des valeurs de consigne à l'injecteur de carburant 3, et le traitement des différents signaux. L'unité de contrôle électronique 7 peut également commander un dispositif 8, par exemple à clapet, contrôlant la quantité d'air alimentant la chambre à combustion 6.

Au moyen de la soupape d'admission 4, on peut introduire la quantité d'air de combustion nécessaire et déterminée par le dispositif à clapet 8, de la conduite d'admission 9 à la chambre de combustion 6. Les gaz d'échappement sortent de la chambre de combustion 6 par la soupape d'échappement 5 et sont acheminés par une conduite d'échappement 10 vers un ou plusieurs catalyseurs 11 (ou convertisseurs catalytiques) capables de traiter les NOx.

Le ou les catalyseurs 11 permettent de traiter les NOx en les réduisant en eau $H_2O$ et en azote $N_2$ principalement. Dans le cas des moteurs à combustion interne, il existe notamment deux systèmes pour traiter les NOx : les pièges à NOx et les catalyseurs par réduction SCR (en anglais : « selective catalytic reduction »). Les pièges à NOx permettent de stocker les NOx en mélange pauvre, puis les réduisent en mélange riche, tandis que les catalyseurs par réduction SCR traitent en continu les NOx en envoyant en continu des réducteurs dans le catalyseur par réduction.

Dans les deux cas, le catalyseur 11 peut être empoisonné et ainsi perdre en efficacité de stockage ou de traitement des NOx. On détermine alors son efficacité afin de décider le déclenchement ou non d'une purge. Pour déterminer cette efficacité, on utilise un capteur à NOx 12 monté sur la conduite d'échappement 10, en aval du catalyseur 11, et permettant de mesurer la quantité de NOx sortant du catalyseur 11. On détermine également la quantité de NOx entrant et/ou stockée dans le catalyseur 1 1 , soit par un modèle soit par un capteur à NOx monté en amont du catalyseur 11.

A partir de la quantité de NOx entrant et/ou stockée dans le catalyseur 11 et de la quantité de NOx sortant du catalyseur 11, l'unité de contrôle électronique 7 va déterminer l'état de fonctionnement du catalyseur 11, et notamment son éventuel empoisonnement au soufre (si le catalyseur 11 est un piège à NOx) ou aux hydrocarbures (si le catalyseur 11 est un catalyseur par réduction). On évite ainsi d'utiliser un modèle pour estimer la quantité de soufre ou d'hydrocarbures dans le catalyseur 11, un tel modèle étant dépendant de grandeurs difficilement mesurables (qualité du carburant, qualité de l'huile, comportement du conducteur, ...).

Pour déterminer l'état de fonctionnement du catalyseur 11, l'unité 7 comprend un premier moyen 13 capable de calculer la valeur E d'une grandeur représentative de l'efficacité du catalyseur 11 à partir de la quantité de NOx entrant et/ou stockée dans le catalyseur 11, et de la quantité de NOx sortant du catalyseur 11. Un deuxième moyen 14 permet alors, à partir de la valeur E de la grandeur représentative de l'efficacité du catalyseur 11 calculée par le premier moyen 13, de comparer cette valeur à un ou plusieurs seuils et de déclencher, en fonction du résultat de la comparaison, une procédure de purge du catalyseur 11 (par l'intermédiaire, par exemple, de l'injecteur de carburant 3 et/ou du dispositif à clapet 8) ou des moyens d'information 16.

Le mode de réalisation représenté sur la figure 1 ne comprend pas de capteur à NOx monté en amont du catalyseur 11, et la quantité de NOx entrant et/ou stockée dans le catalyseur 11 est déterminée à partir d'un troisième moyen 15 compris dans l'unité 7.

Le troisième moyen 15 peut utiliser par exemple un modèle pour calculer la quantité de NOx entrant et/ou stockée dans le catalyseur 11. Le modèle de calcul de la quantité de NOx entrant et/ou stockée peut ainsi être plus ou moins complexe selon qu'il tient ou non compte du vieillissement normal du catalyseur 11. En particulier, si le modèle du troisième moyen 15 est peu complexe et ne prend pas en compte le vieillissement du catalyseur 11, le troisième moyen 15 peut alors comprendre des valeurs $E_{th}$ mémorisées représentatives de l'évolution théorique de l'efficacité du catalyseur 11 en fonction du temps. Dans ce cas, le troisième moyen 15 est capable de calculer l'écart entre la valeur E de la grandeur représentative de l'efficacité du catalyseur 11 et la valeur $E_{th}$ théorique de l'efficacité correspondante. Lorsque l'écart calculé devient supérieur à un seuil défini, cela signifie que le modèle de calcul de la quantité de NOx entrant et/ou stockée n'est plus tout à fait juste et le troisième moyen 15 détermine à nouveau la quantité de NOx entrant et/ou stockée en tenant compte de l'écart calculé précédemment, de manière à tenir compte du vieillissement théorique du catalyseur 11.

Dans la suite de la description, nous considérerons que le catalyseur 11 est un piège à NOx, et donc que la dégradation de l'efficacité du catalyseur est due à un empoisonnement au soufre du piège à NOx.

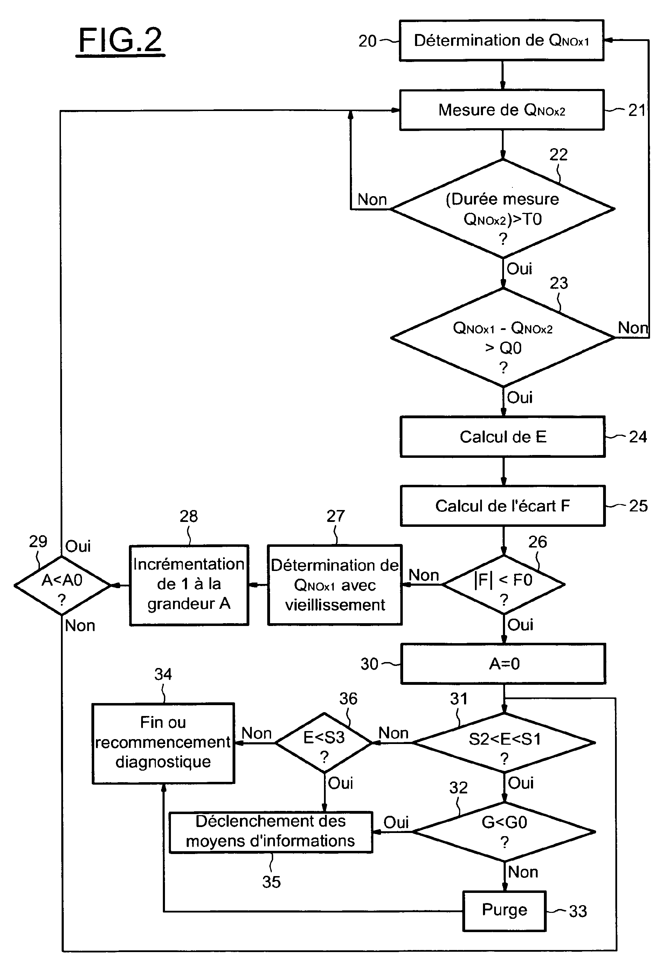

La figure 2 illustre un mode de mise en oeuvre du procédé selon l'invention dans le cas du premier mode de réalisation. Le procédé débute par une étape 20 de détermination de la quantité $Q_{NOx1}$ de NOx entrant et/ou stockée dans le piège à NOx 11. On considère dans la suite de la description que l'étape 20 est réalisée par le troisième moyen 15 (représenté sur la figure 1) à l'aide d'un modèle par exemple, et est transmise au premier moyen 13.

Dans une deuxième étape 21, le premier moyen 13 reçoit également la mesure, faite par le capteur à NOx 12, de la quantité de NOx sortant du piège à NOx 11. Cette mesure peut être exprimée en moles et être directement utilisable par le premier moyen 13, par exemple lorsque le capteur 12 mesure le débit massique de NOx en sortie du piège à NOx 11 et intègre cette mesure sur une durée prédéfinie.

La mesure du capteur 12 peut cependant aussi nécessiter un traitement par le premier moyen 13 pour être utilisable, par exemple lorsque le capteur 12 fournit au premier moyen 13 une mesure de la concentration en ppm (partie par million). Dans ce cas, le premier moyen 13 peut commencer par calculer le débit molaire $D_{echap}$ (en moles par seconde) des gaz d'échappement sortant de la chambre de combustion 6 par la formule (1) :

$$D_{echap} = \frac{D_{air} * N}{60000 * M_{air}} + \frac{D_{carb} * N}{60000 * M_{carb}} \qquad (1)$$

dans laquelle :

- $D_{air}$ représente le débit massique (en grammes par tour) de l'air alimentant la chambre de combustion ;
- $D_{carb}$ représente le débit massique (en grammes par tour) du carburant alimentant la chambre de combustion ;
- N représente la vitesse de rotation du moteur (en tours par minute) ; et
- $M_{air}$ et $M_{carb}$ représentent respectivement les masses molaires (en grammes par mole) de l'air et du carburant.

En particulier, le premier moyen 13 peut utiliser les valeurs de commande du dispositif à clapet 8 et de l'injecteur de carburant 3, fournies par l'unité de contrôle électronique 7, pour déterminer les débits $D_{air}$ et $D_{carb}$. Pour la vitesse de rotation N, elle peut être mesurée de manière classique à l'aide par exemple d'un disque monté sur un vilebrequin et associé à un capteur de marque angulaire.

Le débit massique $D_{NOx}$ (en grammes par mole) de NOx sortant du piège à NOx 11 est alors obtenu par la formule (2) :

$$D_{NOx} = D_{echap} * M_{NOx} * C_{mesurée} * 10^{-6} \qquad (2)$$

dans laquelle :

- $C_{mesurée}$ est la valeur (en ppm) de la concentration en NOx sortant du piège à NOx 11, fournie par le capteur 12 ; et
- $M_{NOx}$ est la masse molaire des oxydes d'azotes.

En intégrant le débit massique $D_{NOx}$ sur une durée prédéfinie, on peut connaître alors la quantité $Q_{NOx2}$ de NOx sortant du catalyseur 11 durant cette durée.

Lorsque le premier moyen 13 connaît les quantités de NOx entrant et/ou stockée $Q_{NOx1}$ et sortant $Q_{NOx2}$ du catalyseur 11, il peut alors calculer la valeur E d'une grandeur représentative de l'efficacité du piège à NOx 11. Pour calculer cette valeur de manière fiable et robuste, le premier moyen 13 peut vérifier dans un premier temps la pertinence des valeurs reçues par le troisième moyen 15 et par le capteur à NOx 12. Ainsi, dans une étape 22, le premier moyen 13 peut vérifier que la mesure de la quantité $Q_{NOx2}$ de NOx sortant du piège à NOx 11 a été effectuée durant une durée d'intégration supérieure à une durée seuil T0 prédéfinie, par exemple 30 secondes. Si la mesure des NOx sortant a été faite sur une durée inférieure ou égale à T0, alors le procédé reprend à l'étape 21 ; dans le cas contraire, la quantité $Q_{NOx2}$ de NOx sortant est considérée comme suffisamment fiable.

Puis, dans une étape 23, le premier moyen 13 peut vérifier que la quantité de NOx entrant et/ou stockée, déterminée par le troisième moyen 15, permet un calcul fiable et robuste de la grandeur représentative de l'efficacité du piège à NOx 11. Ainsi, le premier moyen 13 peut vérifier que la quantité de NOx sortant et/ou stockée $Q_{NOx1}$ est supérieure à un seuil Q0 prédéfinie, par exemple 0,2 grammes. Si la quantité $Q_{NOx1}$ est inférieure ou égale à Q0, alors le procédé reprend à l'étape 20 ; dans le cas contraire, la quantité $Q_{NOx1}$ de NOx entrant est considérée comme suffisante pour permettre un calcul fiable de la grandeur représentative de l'efficacité du piège.

Le premier moyen 13 calcule alors, dans une étape 24, la valeur E de la grandeur représentative de l'efficacité du piège à NOx 11, par la formule (3) :

$$E = \left| \frac{Q_{NOx1} - Q_{NOx2}}{Q_{NOx1}} \right| \qquad (3)$$

Une fois la valeur de la grandeur E calculée, et lorsque la quantité de NOx entrant et/ou stockée dans le piège à NOx 11 a été déterminée par le troisième moyen 15, il est possible de modifier le modèle de calcul de $Q_{NOx1}$ du troisième moyen 15 afin d'obtenir une meilleure précision sur la quantité de NOx entrant et/ou stockée dans la piège à NOx 11. En particulier, le modèle de calcul de $Q_{NOx1}$ peut être peu complexe et être corrigé dans un second temps selon le procédé suivant.

Dans une étape 25, le troisième moyen 15 calcule par exemple l'écart F entre la valeur E de l'efficacité calculée par le premier moyen 13 et une des valeurs $E_{th}$ mémorisées représentant l'évolution théorique de l'efficacité en fonction du temps. Les valeurs $E_{th}$ peuvent être déterminées par exemple sur un banc d'essai ou être fournies par le fournisseur du piège à NOx 11. L'écart F peut être calculé selon la formule (4) suivante :

$$F = \left| \frac{E_{th} - E}{E_{th}} \right| \qquad (4)$$

Dans une étape 26, le troisième moyen 15 compare l'écart F à un seuil F0 prédéfini, par exemple 20%. Lorsque l'écart F est supérieur au seuil F0, on peut estimer que le modèle de calcul de $Q_{NOx1}$ déterminant la quantité de NOx entrant et/ou stockée dans le piège à NOx 11 n'est pas suffisamment précis. Plus particulièrement, l'écart peut être dû au vieillissement naturel du piège à NOx 11, qui peut ne pas être pris en compte par le modèle de calcul de $Q_{NOx1}$ et qui peut, sans correction, faire croire à un empoisonnement du piège à NOx 11 et entraîner une purge du soufre inutile.

Pour éviter cela, le modèle du troisième moyen 15 est modifié ou corrigé, de manière à prendre en compte ce vieillissement naturel du piège à NOx 11. En particulier, le troisième moyen 15 recalcule, durant l'étape 27, la quantité $Q_{NOx1}$ en tenant compte de l'écart F, afin que la quantité $Q_{NOX1}$ ainsi recalculée prenne en compte le vieillissement naturel du piège à NOx 11. Dans le même temps, lors d'une étape 28, un compteur A est incrémenté de 1. Le compteur A permet de savoir combien de corrections successives du modèle de calcul de la quantité $Q_{NOx1}$ ont été effectuées, et, lors d'une étape 29, le troisième moyen 15 compare la valeur du compteur A à un seuil A0, par exemple 5, afin de déterminer si la dérive de l'efficacité calculée par le troisième moyen 15 par rapport aux valeurs mémorisées $E_{th}$ est effectivement due au vieillissement au piège à NOx 11, ou bien est due à un empoisonnement au soufre du piège à NOx 11.

Ainsi, en-dessous du seuil prédéfini A0, on considère que les corrections apportées au modèle de calcul de la quantité $Q_{NOx1}$, permettent de prendre en compte le vieillissement naturel du piège à NOx 11 , et le procédé recommence à l'étape 21 en considérant, cette fois-ci, la valeur recalculée $Q_{NOx1}$.

Au contraire, si le nombre de corrections successives dépasse le seuil prédéfini A0, alors on peut estimer que l'écart F entre l'efficacité calculée E et l'efficacité mémorisée $E_{th}$ n'est pas dû au modèle de calcul de $Q_{NOx1}$ mais est dû à un empoisonnement au soufre du piège à NOx 11. Dans ce cas, la valeur E est alors traitée par le deuxième moyen 14 pour déterminer l'action à réaliser, comme cela est décrit plus bas.

Lorsque, lors de l'étape 26, l'écart F est inférieur au seuil F0, alors le modèle de calcul de $Q_{NOx1}$ est considéré comme correct. Le compteur A est alors remis à zéro dans une étape 30, et la valeur E de l'efficacité est traitée par le deuxième moyen 14 pour déterminer l'action à réaliser.

Le deuxième moyen 14 reçoit la valeur E et la compare, dans une étape 31, à un premier seuil S1 et à un deuxième seuil S2 inférieur au premier seuil S1, par exemple 55% et 40% respectivement. Lorsque la valeur E est inférieure au premier seuil S1 et supérieure au deuxième seuil S2, alors la perte d'efficacité du piège à NOx 11 est considérée comme conséquente. On compare alors, dans une étape 32, la distance parcourue G par le véhicule depuis la dernière purge au soufre à un seuil prédéfini G0, par exemple 1000 km, afin de déterminer si la perte d'efficacité du piège à NOx 11 a pour origine un empoisonnement au soufre ou est la conséquence du vieillissement du piège à NOx 11.

Si la distance G est supérieure au seuil G0, alors la perte d'efficacité est due à un empoisonnement au soufre et le deuxième moyen 14 déclenche, dans une étape 33, une procédure de purge du soufre, puis l'arrêt du procédé ou le retour à l'étape 20, dans un étape 34. En particulier, la procédure de purge du soufre peut par exemple être déclenchée par le deuxième moyen 14 à partir des valeurs de consigne de l'injecteur 3 et du dispositif à clapet 8 qui contrôlent la quantité d'air et de carburant alimentant la chambre de combustion 6. On peut alors augmenter la température des gaz d'échappement et/ou faire varier la richesse des gaz d'échappement avant leur entrée dans le piège à NOx.

Si la distance G est inférieure au seuil G0, alors la perte d'efficacité est due au vieillissement au piège à NOx 11. Dans ce cas, une purge du soufre ne permettrait pas de retrouver une efficacité suffisante, et pourrait même accélérer le vieillissement du piège. En effet, si la distance G est inférieure au seuil G0, on considère que la dernière purge au soufre a eu lieu suffisamment récemment pour que la perte d'efficacité du piège à NOx ne soit pas due à un empoisonnement au soufre. Le deuxième moyen 14 déclenche alors, dans une étape 35, des moyens d'information 16.

Lorsque, à l'étape 31, la valeur E de l'efficacité n'est pas comprise entre les seuils S1 et S2, le deuxième moyen 14 compare la valeur E à un troisième seuil prédéfini S3 inférieur ou égal au deuxième seuil S2, dans une étape 36. Par exemple, le troisième seuil S3 peut être égal à 30%. Si la valeur E est inférieure au troisième seuil S3, alors on estime que même une procédure de purge en soufre du piège à NOx 11 ne permettra pas de récupérer suffisamment d'efficacité à long terme. En particulier, lorsque l'empoisonnement au soufre est trop important, il peut alors devenir irréversible. Le deuxième moyen 14 déclenche alors les moyens d'information 16 pendant l'étape 35. Si la valeur E de l'efficacité est supérieure au troisième seuil S3, le deuxième moyen 14 déclenche l'arrêt du procédé ou le retour à l'étape 20, dans l'étape 34.

Selon un autre mode de réalisation et de mise en oeuvre, le système peut comprendre un deuxième capteur à NOx analogue au capteur 12 et monté en amont du catalyseur 11. Dans ce cas, la quantité $Q_{NOx1}$ entrant dans le catalyseur 11 est déterminée de manière analogue à la quantité $Q_{NOx2}$ sortant du catalyseur 11, et le troisième moyen 15 peut être supprimé. Le procédé est mis en oeuvre de manière analogue, sauf que les étapes de corrections du modèle de calcul de $Q_{NOx1}$ (étapes 25 à 30) ne sont plus mises en oeuvre.

Ainsi, le système et le procédé selon l'invention permettent, grâce à un capteur à NOx monté en aval du catalyseur, de gérer les purges en soufre ou en hydrocarbures du catalyseur. Cette gestion est plus précise qu'un modèle de chargement en soufre ou en hydrocarbures, car le capteur à NOx permet de mesurer réellement le traitement des NOx tandis qu'un modèle de chargement estimerait une quantité de soufre ou d'hydrocarbure dépendante de nombreux paramètres. En particulier, le procédé permet, notamment à partir des mesures du capteur, de déterminer l'empoisonnement et le vieillissement du catalyseur.

La gestion des purges permet également de ne pas déclencher inutilement des purges, par exemple lorsque la diminution de l'efficacité du catalyseur est due au vieillissement naturel. On évite ainsi une dégradation supplémentaire du catalyseur causée par les purges, et surtout des émissions supplémentaires, d'hydrocarbures et de monoxyde de carbone notamment, en sortie d'échappement.

En outre, le procédé selon l'invention est réalisé de manière passive et n'entraîne pas de conséquence sur les émissions polluantes du système ou sur la dégradation du système. Le procédé peut alors être mis en oeuvre fréquemment et la décision concernant l'action à déclencher peut alors être prise à partir de plusieurs résultats fournis selon le procédé, plutôt que sur un seul.

**Revendications**

1. Procédé de gestion d'un module de traitement des gaz d'échappement produits par un moteur à combustion interne d'un véhicule automobile, le module de traitement comprenant un catalyseur (11) capable de traiter des oxydes d'azote (NOx) présents dans les gaz d'échappement, le catalyseur étant un piège à NOx ou un catalyseur par réduction, caractérisé en cc que :

   - on mesure la quantité ($Q_{NOx2}$) de NOx sortant du catalyseur ;
   - on détermine la quantité ($Q_{NOx1}$) de NOx entrant et/ou stockée dans le catalyseur ;
   - on calcule, à partir de la quantité ($Q_{NOx1}$) de NOx entrant et/ou stockée dans le catalyseur et de la quantité ($Q_{NOx2}$) de NOx sortant du catalyseur, la valeur (E) d'une grandeur représentative de l'efficacité du catalyseur à traiter les NOx :
   - on compare la valeur (E) de la grandeur représentative de l'efficacité du catalyseur à un premier seuil (S1) et à un deuxième seuil (S2) inférieur au premier seuil (S1) et, lorsque la valeur (E) de la grandeur représentative de l'efficacité du catalyseur est inférieure au premier seuil (S1) et supérieure au deuxième seuil (S2), on déclenche une procédure de purge du catalyseur, purge du soufre dans le cas d'un piège à NOx, purge aux hydrocarbures dans le cas d'un catalyseur par réduction, lorsque la distance (G) parcourue par le véhicule automobile depuis la dernière purge est supérieure à une valeur (G0) mémorisée ou déterminée, ou on déclenche les moyens d'information (16) lorsque la distance parcourue (G) est inférieure à la valeur (G0) mémorisée ou déterminée.

2. Procédé selon la revendication 1 dans lequel on compare la valeur (E) de la grandeur représentative de l'efficacité du catalyseur à un troisième seuil (S3) inférieur au deuxième seuil (S2) et, lorsque la valeur (E) de la grandeur représentative de l'efficacité du catalyseur est inférieure au troisième seuil (S3), on déclenche les moyens d'information (16).

3. Procédé selon l'une des revendications 1 à 2 dans lequel on détermine la quantité ($Q_{NOx1}$) de NOx entrant dans le catalyseur à partir de valeurs mesurées.

4. Procédé selon l'une des revendications 1 à 2 dans lequel on détermine la quantité ($Q_{NOx1}$) de NOx entrant et/ou stockée dans le catalyseur à partir de valeurs mémorisées ou déterminées.

5. Procédé selon la revendication 4 dans lequel, avant de comparer la valeur (E) de la grandeur représentative de l'efficacité du catalyseur au premier seuil (S1), on calcule l'écart (F) entre la valeur (E) de la grandeur représentative de l'efficacité du catalyseur et une valeur ($E_{th}$) mémorisée ou déterminée, et dans lequel, lorsque l'écart (F) est supérieur à un quatrième seuil (F0), on détermine à nouveau la quantité ($Q_{NOx1}$) de NOx entrant et/ou stockée dans le catalyseur à partir de valeurs mémorisées ou déterminées et à partir de l'écart (F) calculé, de manière à prendre en compte le vieillissement du catalyseur.

6. Système de gestion d'un module de traitement des gaz d'échappement produits par un moteur à combustion interne d'un véhicule automobile, **caractérisé en ce qu'**il comprend :

   - un circuit d'acheminement des gaz d'échappement
   - un catalyseur (11) monté dans le circuit d'acheminement et capable de traiter des oxydes d'azote (NOx) présents dans les gaz d'échappement, le catalyseur étant un piège à NOx ou un catalyseur par réduction,
   - un capteur à NOx (12) monté dans le circuit d'acheminement, en aval du catalyseur (11), et capable de mesurer la quantité ($Q_{NOx2}$) de NOx sortant du catalyseur,
   - un moyen capable de déterminer la quantité ($Q_{NOx1}$) de NOx entrant et/ou stockée dans le catalyseur et
   - une unité de contrôle électronique (7) comprenant :

      - un premier moyen (13) capable de calculer, à partir de la quantité ($Q_{NOx1}$) de NOx entrant et/ou stockée dans le catalyseur et de la quantité ($Q_{NOx2}$) de NOx sortant du catalyseur, la valeur (E) d'une grandeur représentative de l'efficacité du catalyseur à traiter les NOx ;
      - un deuxième moyen (14) capable de comparer la valeur (E) de la grandeur représentative de l'efficacité du catalyseur à un premier seuil (S1) et à un deuxième seuil (S2) inférieur au premier seuil (S1), et capable, lorsque la valeur (E) de la grandeur représentative de l'efficacité du catalyseur est inférieure au premier seuil (S1) et supérieure au deuxième seuil (S2), de déclencher une procédure de purge du catalyseur, purge du soufre dans le cas d'un piège à NOx, purge aux hydrocarbures dans le cas d'un catalyseur par réduction, lorsque la distance (G) parcourue par le véhicule automobile depuis la dernière purge est supérieure à une valeur (G0 mémorisée ou déterminée, ou de déclencher les moyens d'information (16) lorsque la distance parcourue (G) est inférieure à la valeur (G0) mémorisée ou déterminée.

**7.** Système de gestion selon la revendication 6 dans lequel le deuxième moyen (14) est capable de comparer la valeur (E) de la grandeur représentative de l'efficacité du catalyseur à un troisième seuil (S3) inférieur au deuxième seuil (S2), et est capable, lorsque la valeur (E) de la grandeur représentative de l'efficacité du catalyseur est inférieure au troisième seuil (S3), de déclencher les moyens d'information (16).

**8.** Système de gestion selon l'une des revendications 6 à 7 dans lequel le moyen capable de déterminer la quantité $(Q_{NOx1})$ de NOx entrant et/ou stockée dans le catalyseur est un troisième moyen (15) compris dans l'unité de contrôle électronique (7), le troisième moyen (15) étant capable de déterminer la quantité $(Q_{NOx1})$ de NOx entrant et/ou stockée dans le catalyseur à partir de valeurs mémorisées ou déterminées, et de calculer l'écart (F) entre la valeur (E) de la grandeur représentative de l'efficacité du catalyseur et une valeur $(E_{th})$ mémorisée ou déterminée, de manière à ce que, lorsque l'écart (F) est supérieur à un quatrième seuil (F0), le troisième moyen (15) est capable de déterminer à nouveau la quantité $(Q_{NOx1})$ de NOx entrant et/ou stockée dans le catalyseur à partir de valeurs mémorisées ou déterminées et à partir de l'écart (F) calculé de manière à prendre en compte le vieillissement du catalyseur (11).

**Claims**

**1.** Method for managing a module for processing the exhaust gases produced by an internal combustion engine of a motor vehicle, the processing module comprising a catalyst (11) capable of processing the nitrogen oxides (NOx) present in the exhaust gases, the catalyst being an NOx trap or a reduction catalyst, **characterized in that**:

- the quantity $(Q_{NOx2})$ of NOx leaving catalyst is measured;
- the quantity $(Q_{NOx1})$ of NOx entering into and/or stored in the catalyst is determined;
- the quantity $(Q_{NOx1})$ of Nox entering into and/or stored in the catalyst and the quantity $(Q_{NOx2})$ of NOx leaving the catalyst are used to calculate the value (E) of a quantity representative of the effectiveness of the catalyst in treating the NOx products;
- the value (E) of the quantity representative of the effectiveness of the catalyst is compared to a first threshold (S1) and to a second threshold (S2) below the first threshold (S1) and, when the value (E) of the quantity representative of the effectiveness of the catalyst is lower than the first threshold (S1) and above the second threshold (S2), a catalyst purge procedure is triggered, purging sulphur in the case of an NOx trap, purging hydrocarbons in the case of a reduction catalyst, when the distance (G) travelled by the motor vehicle since the last purge is greater than a stored or determined value (G0), or the information means (16) are triggered when the distance travelled (G) is less than the stored or determined value (G0).

**2.** Method according to Claim 1, in which the value (E) of the quantity representative of the effectiveness of the catalyst is compared to a third threshold (S3) lower than the second threshold (S2) and, when the value (E) of the quantity representative of the effectiveness of the catalyst is lower than the third threshold (S3), the information means (16) are triggered.

**3.** Method according to either of Claims 1 and 2, in which the quantity $(Q_{NOx1})$ of NOx entering into the catalyst is determined on the basis of measured values.

**4.** Method according to either of Claims 1 and 2, in which the quantity $(Q_{NOx1})$ of NOx entering into and/or stored in the catalyst is determined on the basis of stored or determined values.

**5.** Method according to Claim 4, in which, before comparing the value (E) of the quantity representative of the effectiveness of the catalyst to the first threshold (S1), the difference (F) between the value (E) of the quantity representative of the effectiveness of the catalyst and a stored or determined value $(E_{th})$ is calculated, and in which, when the difference (F) is greater than a fourth threshold (F0), the quantity $(Q_{NOx1})$ of NOx entering into and/or stored in the catalyst is determined again on the basis of stored or determined values and on the basis of the calculated difference (F), so as to take into account the ageing of the catalyst.

**6.** System for managing a module for processing exhaust gases produced by an internal combustion engine of a motor vehicle, **characterized in that** it comprises:

- an exhaust gas routing circuit
- a catalyst (11) mounted in the routing circuit and capable of processing nitrogen oxides (NOx) present in the exhaust gases, the catalyst being an NOx trap or a reduction catalyst,
- an NOx sensor (12) mounted in the routing circuit, downstream of the catalyst (11), and capable of measuring the quantity ($Q_{NOx2}$) of NOx leaving the catalyst,
- a means capable of determining the quantity ($Q_{NOx1}$) of NOx entering into and/or stored in the catalyst and
- an electronic control unit (7) comprising:

- a first means (13) capable of using the quantity ($Q_{NOx1}$) of NOx entering into and/or stored in the catalyst and the quantity ($Q_{NOx2}$) of NOx leaving the catalyst to calculate the value (E) of a quantity representative of the effectiveness of the catalyst in processing the NOx products;
- a second means (14) capable of comparing the value (E) of the quantity representative of the effectiveness of the catalyst to a first threshold (S1) and to a second threshold (S2) lower than the first threshold (S1), and capable, when the value (E) of the quantity representative of the effectiveness of the catalyst is lower than the first threshold (S1) and above the second threshold (S2), of triggering a catalyst purge procedure, purging sulphur in the case of an NOx trap, purging hydrocarbons in the case of a reduction catalyst, when the distance (G) travelled by the motor vehicle since the last purge is greater than a stored or determined value (G0), or of triggering the information means (16) when the distance travelled (G) is less than the stored or determined value (G0),

7. Management system according to Claim 6, in which the second means (14) is capable of comparing the value (E) of the quantity representative of the effectiveness of the catalyst to a third threshold (S3) lower than the second threshold (S2), and is capable, when the value (E) of the quantity representative of the effectiveness of the catalyst is lower than the third threshold (S3), of triggering the information means (16).

8. Management system according to either of Claims 6 and 7, in which the means capable of determining the quantity ($Q_{NOx1}$) of NOx entering into and/or stored in the catalyst is a third means (15) included in the electronic control unit (7), the third means (15) being capable of determining the quantity ( $Q_{NOx1}$) of NOx entering into and/or stored in the catalyst based on stored or determined values, and of calculating the difference (F) between the value (E) of the quantity representative of the effectiveness of the catalyst and a stored or determined value ($E_{th}$), so that, when the difference (F) is above a fourth threshold (F0), the third means (15) is capable of once again determining the quantity ($Q_{NOx1}$) of NOx entering into and/or stored in the catalyst on the basis of stored or determined values and on the basis of the calculated difference (F) so as to take account of the ageing of the catalyst (11).

**Patentansprüche**

1. Verfahren zur Verwaltung eines Moduls zur Behandlung der von einem Verbrennungsmotor eines Kraftfahrzeugs erzeugten Abgase, wobei das Behandlungsmodul einen Katalysator (11) enthält, der in den Abgasen vorhandene Stickoxide (NOx) behandeln kann, wobei der Katalysator eine NOx-Falle oder ein Reduktionskatalysator ist, **dadurch gekennzeichnet, dass**:

- die Menge ($Q_{NOx2}$) von aus dem Katalysator austretenden NOx gemessen wird;
- die in den Katalysator eintretende und/oder dort gespeicherte Menge ($Q_{NOx1}$) von NOx bestimmt wird;
- ausgehend von der in den Katalysator eintretenden und/oder dort gespeicherten Menge ($Q_{NOx1}$) von NOx und von der aus dem Katalysator austretenden Menge ($Q_{NOx2}$) von NOx der Wert (E) einer Größe berechnet wird, die für die Wirksamkeit des Katalysators bei der Behandlung der NOx repräsentativ ist;
- der Wert (E) der für die Wirksamkeit des Katalysators repräsentativen Größe mit einer ersten Schwelle (S1) und mit einer zweiten Schwelle (S2) unter der ersten Schwelle (S1) verglichen wird, und, wenn der Wert (E) der für die Wirksamkeit des Katalysators repräsentativen Größe unter der ersten Schwelle (S1) und über der zweiten Schwelle (S2) liegt, ein Entleerungsverfahren des Katalysators ausgelöst wird, Entleerung des Schwefels im Fall einer NOx-Falle, Entleerung mit Kohlenwasserstoffen im Fall eines Reduktionskatalysators, wenn die vom Kraftfahrzeug seit der letzten Entleerung zurückgelegte Strecke (G) über einem gespeicherten oder bestimmten Wert (G0) liegt, oder die Informationseinrichtungen (16) ausgelöst werden, wenn die zurückgelegte Strecke (G) unter dem gespeicherten oder bestimmten Wert (G0) liegt.

2. Verfahren nach Anspruch 1, bei dem der Wert (E) der für die Wirksamkeit des Katalysators repräsentativen Größe mit einer dritten Schwelle (S3) verglichen wird, die unter der zweiten Schwelle (S2) liegt, und, wenn der Wert (E) der für die Wirksamkeit des Katalysators repräsentativen Größe unter der dritten Schwelle (S3) liegt, die Informationseinrichtungen (16) ausgelöst werden.

3. Verfahren nach einem der Ansprüche 1 bis 2, bei dem die in den Katalysator eintretende Menge ($Q_{NOx1}$) von NOx ausgehend von gemessenen Werten bestimmt wird.

4. Verfahren nach einem der Ansprüche 1 bis 2, bei dem die in den Katalysator eintretende und/oder dort gespeicherte Menge ($Q_{NOx1}$) von NOx ausgehend von gespeicherten oder bestimmten Werten bestimmt wird.

5. Verfahren nach Anspruch 4, bei dem vor dem Vergleich des Werts (E) der für die Wirksamkeit des Katalysators repräsentativen Größe mit der ersten Schwelle (S1) die Abweichung (F) zwischen dem Wert (E) der für die Wirksamkeit des Katalysators repräsentativen Größe und einem gespeicherten oder bestimmten Wert ($E_{th}$) berechnet wird, und bei dem, wenn die Abweichung (F) über einer vierten Schwelle (F0) liegt, die in den Katalysator eintretende und/oder dort gespeicherte Menge ($Q_{NOx1}$) von NOx ausgehend von gespeicherten oder bestimmten Werten und ausgehend von der berechneten Abweichung (F) erneut bestimmt wird, um das Altern des Katalysators zu berücksichtigen.

6. System zur Verwaltung eines Moduls zur Behandlung der von einem Verbrennungsmotor eines Kraftfahrzeugs erzeugten Abgase, **dadurch gekennzeichnet, dass** es enthält:

   - einen Beförderungskreis der Abgase,
   - einen Katalysator (11), der in den Beförderungskreis montiert ist und in den Abgasen vorhandene Stickoxide (NOx) behandeln kann, wobei der Katalysator eine NOx-Falle oder ein Reduktionskatalysator ist,
   - eine NOx-Sonde (12), die in den Beförderungskreis hinter dem Katalysator (11) montiert ist und die aus dem Katalysator austretende Menge ($Q_{NOx2}$) von NOx messen kann,
   - eine Einrichtung, die die in den Katalysator eintretende und/oder dort gespeicherte Menge ($Q_{NOx1}$) von NOx bestimmen kann, und
   - eine elektronische Steuereinheit (7), die enthält:

      - eine erste Einrichtung (13), die ausgehend von der in den Katalysator eintretenden und/oder dort gespeicherten Menge ($Q_{NOx1}$) von NOx und von der aus dem Katalysator austretenden Menge ($Q_{NOx2}$) von NOx den Wert (E) einer für die Wirksamkeit des Katalysators bei der Behandlung der NOx repräsentativen Größe berechnen kann;
      - eine zweite Einrichtung (14), die den Wert (E) der für die Wirksamkeit des Katalysators repräsentativen Größe mit einer ersten Schwelle (S1) und mit einer zweiten Schwelle (S2) unter der ersten Schwelle (S1) vergleichen kann, und die, wenn der Wert (E) der für die Wirksamkeit des Katalysators repräsentativen Größe unter der ersten Schwelle (S1) und über der zweiten Schwelle (S2) liegt, eine Entleerungsprozedur des Katalysators auslösen kann, Entleerung des Schwefels im Fall einer NOx-Falle, Entleerung mit Kohlenwasserstoffen im Fall eines Reduktionskatalysators, wenn die vom Kraftfahrzeug seit der letzten Entleerung zurückgelegte Strecke (G) über einem gespeicherten oder bestimmten Wert (G0) liegt, oder die Informationseinrichtungen (16) auslösen kann, wenn die zurückgelegte Strecke (G) unter dem gespeicherten oder bestimmten Wert (G0) liegt.

7. Verwaltungssystem nach Anspruch 6, bei dem die zweite Einrichtung (14) den Wert (E) der für die Wirksamkeit des Katalysators repräsentative Größe mit einer dritten Schwelle (S3) unter der zweiten Schwelle (S2) vergleichen kann, und wenn der Wert (E) der für die Wirksamkeit des Katalysators repräsentativen Größe unter der dritten Schwelle (S3) liegt, die Informationseinrichtungen (16) auslösen kann.

8. Verwaltungssystem nach einem der Ansprüche 6 bis 7, bei dem die Einrichtung, die die in den Katalysator eintretende und/oder dort gespeicherte Menge ($Q_{NOx1}$) von NOx bestimmen kann, eine dritte Einrichtung (15) ist, die in der elektronischen Steuereinheit (7) enthalten ist, wobei die dritte Einrichtung (15) die in den Katalysator eintretende und/oder dort gespeicherte Menge ($Q_{NOx1}$) von NOx ausgehend von gespeicherten oder bestimmten Werten bestimmen und die Abweichung (F) zwischen dem Wert (E) der für die Wirksamkeit des Katalysators repräsentativen Größe und einem gespeicherten oder bestimmten Wert ($E_{th}$) berechnen kann, damit, wenn die Abweichung (F) über einer vierten Schwelle (F0) liegt, die dritte Einrichtung (15) erneut die in den Katalysator eintretende und/oder dort gespeicherte Menge ($Q_{NOx1}$) von NOx ausgehend von gespeicherten oder bestimmten Werten und ausgehend von der berechneten Abweichung (F) bestimmen kann, um das Altern des Katalysators (11) zu berücksichtigen.

EP 2 193 261 B1

# FIG.1

13

# FIG.2

20 — Détermination de $Q_{NOx1}$

Mesure de $Q_{NOx2}$ — 21

22
(Durée mesure $Q_{NOx2}$)>T0 ? — Non / Oui

23
$Q_{NOx1} - Q_{NOx2} > Q0$ ? — Non / Oui

Calcul de E — 24

Calcul de l'écart F — 25

28 — Incrémentation de 1 à la grandeur A

27 — Détermination de $Q_{NOx1}$ avec vieillissement

26 — |F| < F0 ? — Non / Oui

29 — A<A0 ? — Oui / Non

30 — A=0

34 — Fin ou recommencement diagnostique

36 — E<S3 ? — Non / Oui

31 — S2<E<S1 ? — Non / Oui

32 — G<G0 ? — Oui / Non

35 — Déclenchement des moyens d'informations

Purge — 33

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040250533 A
- EP 0936349 A
- US 20040055278 A
- US 20030010016 A
- US 20040040289 A
- JP 2005321247 A
- EP 1517013 A
- FR 2783872
- US 20040031261 A